# EUROPÄISCHE PATENTSCHRIFT

(11) **EP 1 034 027 B1**
(45) Veröffentlichungstag und Bekanntmachung des Hinweises auf die Patenterteilung: **28.12.2005**
(21) Anmeldenummer: 98963369.8
(22) Anmeldetag: 19.11.1998
(51) Int. Cl.: B01D 61/48, C25B 15/08, C02F 1/469, C02F 1/46, B01J 47/08

(54) **VERFAHREN UND VORRICHTUNG ZUR WASSERTEILENTSALZUNG**
METHOD AND DEVICE FOR WATER DELSALINIZATION
PROCEDE ET DISPOSITIF DE DESSALEMENT PARTIEL DE L'EAU

(30) Priorität: 25.11.1997 DE 19752111
(43) Veröffentlichungstag der Anmeldung: 13.09.2000
(73) Patentinhaber: FORSCHUNGSZENTRUM JÜLICH GMBH, 52425 Jülich (DE)
(72) Erfinder: FÜRST, Leander, D-52428 Jülich (DE); NEUMEISTER, Herbert, D-52428 Jülich (DE); FLUCHT, Reinhold, D-52428 Jülich (DE); KIESSLING, Thomas, D-52066 Aachen (DE)
(86) Internationale Anmeldenummer: PCT/DE1998/003446
(87) Internationale Veröffentlichungsnummer: WO 1999/026716

(56) Entgegenhaltungen:
- WO-A-95/32052
- DE-A- 3 329 813
- DE-A- 4 244 060
- DE-A- 4 418 812
- DE-C- 4 202 480
- GB-A- 2 311 999

## Beschreibung

Die Erfindung betrifft ein Verfahren zur Wasserteilentsalzung sowie eine zur Wasserteilentsalzung geeignete Vorrichtung.

Nach dem Stand der Technik sind neben konventionellen Ionenaustauschverfahren mit Harzbetten Elektrodenionisationsverfahren bekannt, mit denen Wasser entsalzt werden kann.

Aus DE 42 02 480 C1 ist eine elektrochemische Zelle zur elektrolytischen Behandlung wäßriger Lösungen bekannt, wobei diese Zelle keine Entsalzung mit Ionentauschern und Ionentauschmembranen beinhaltet.

DE 33 29 813 A1 betrifft ein Verfahren und eine Vorrichtung zum Behandeln von Flüssigkeiten, insbesondere zur Entsalzung wäßriger Lösungen, wobei die zu behandelnde Flüssigkeit aufeinanderfolgenden Behandlungskammern zugeführt wird und die Behandlung bzw. Entsalzung in einer ersten Stufe mittels elektrischer Ionenverdrängung und in einer zweiten Stufe mittels elektrischer Ionendesorption erfolgt. Der Anodenraum ist durch eine Ionenaustauschmembran vom Kationenaustauschmaterial getrennt und enthält keinen Ionenaustauscher.

Die Vorrichtung gemäß WO-A-95 32052 dient der Elektrodeionisation und beinhaltet Ionenaustauscherkammern die lediglich durch Ionentauschermembranen ohne einen dazwischenliegenden Soleraum voneinander getrennt sind. Die Ionenaustauscherkammern sind mit einer Mischung von Anionen- und Kationentauschern gefüllt, wobei sich in den Elektrodenräumen selbst keine Ionentauscher befinden.

Aus DE-OS 42 44 060 A1 ist ein Verfahren bekannt, bei dem das zu entsalzende Wasser durch eine Anlage geleitet wird. Dieses Verfahren beruht auf einer Kombination von Kationenaustausch und Umkehrosmose. Das Wasser durchläuft dabei zunächst einen mit Kationenaustauscher beladenen Anodenraum und wird danach in eine Umkehrosmoseanlage eingeführt, die es zum Teil als Permeat verläßt. Zum Schutz der Umkehrosmoseanlage vor Ausfällungen wird in einer Entgasungskammer Carbonat aus dem Wasser als CO₂ ausgetrieben. Weiterhin werden zur Vermeidung von Hydroxidfällungen in und an der Ionenaustauschermembran der Spülflüssigkeit, welche durch einen Kathodenraum geleitet wird, Anionen zugegeben. Das ebenfalls die Umkehrosmose verlassende Konzentrat, ein mit Anionen angereichertes und saures Wasser, wird in einen Kathodenraum eingebracht, welcher mittels einer Membran an den Anodenraum grenzt. Damit werden die durch die Membran in den Soleraum eintretenden Kationen ausgetragen. Die Vorrichtung weist nur einen einzigen Ionentauscher-Anoden-Raum auf, welcher durch eine Membran vom Kathodenraum getrennt ist. Der Kathodenraum ist hier gleichzeitig der Soleraum.

In GB-A-2 311 999 wird eine Vorrichtung zur Elektrodialyse salzhaltigen Wassers beschrieben, die einen mit Kationenaustauscher beschickten Anodenraum, einen mit Anionenaustauscher beschickten Kathodenraum sowie einen sich zwischen dem Anoden und Kathodenraum befindenden Soleraum aufweist, wobei der Anodenraum durch eine Kationenaustauschermembran und der Kathodenraum durch eine Anionenaustauschermembran vom Soleraum getrennt ist, wobei der Soleraum mit einer Eingangsleitung und einer Ausgangsleitung ausgestattet ist.

Aus der DE-OS 44 18 812 A1 ist eine Elektrolysezelle bekannt, die einen mit Anionenaustauscher beschickten Kathodenraum, einen mit Kationenaustauscher beschickten Anodenraum, sowie einen Soleraum umfaßt. Die beiden Elektroden stehen in direktem Kontakt mit den Ionenaustauschern. Das zu entsalzende Wasser durchläuft dabei zunächst die beiden Elektrodenräume. Ein Teilstrom wird dazu genutzt, einen Abtransport von Ionen aus dem Soleraum zu bewirken.

Bei dem Verfahren der DE-OS 42 44 060 A1 müssen eine Elektrolyse und eine Umkehrosmose miteinander kombiniert werden um eine Entsalzung des Wassers zu erreichen. Dieses Verfahren ist somit apparativ sehr aufwendig und nur in größeren Anlagen zu betreiben.

Die Elektrolysezelle der DE-OS 44 18 812 A1 ist zwar eine kompakte Anlage, jedoch besteht das Problem, daß es im Soleraum und im Anionenaustauscherharzbett zum Absetzen von Niederschlägen, insbesondere von Carbonaten kommen kann, falls Härtebildner im Speisewasser vorhanden sind.

Es ist daher die Aufgabe der Erfindung ein Verfahren und eine Vorrichtung zu schaffen, mit denen Wasser in kompakten Anlagen in einem Verfahrensschritt ohne die Gefahr eine Niederschlagsbildung im Soleraum und Anionenaustauscherraum entsalzt beziehungsweise teilentsalzt wird.

Ausgehend vom Oberbegriff des Anspruchs 1 wird die Aufgabe erfindungsgemäß gelöst mit den im kennzeichnenden Teil des Anspruchs 1 angegebenen Merkmalen.

Mit den erfindungsgemäßen Verfahren und der Vorrichtung ist es nunmehr möglich, in einem Verfahrensschritt Wasser in einer kompakten Anlage ohne Gefahr einer Niederschlagsbildung im Sole- bzw. Anionenaustauscherraum zu entsalzen oder teilzuentsalzen.

Vorteilhafte Weiterbildungen der Erfindung sind in den Unteransprüchen angegeben.

Die Zeichnungen zeigen eine erfindungsgemäße Vorrichtung in schematischer Form.

Es zeigt:
- Fig.1:: Eine erfindungsgemäße Elektrolysezelle
- Fig.2:: Eine Abwandlung der Elektrolysezelle

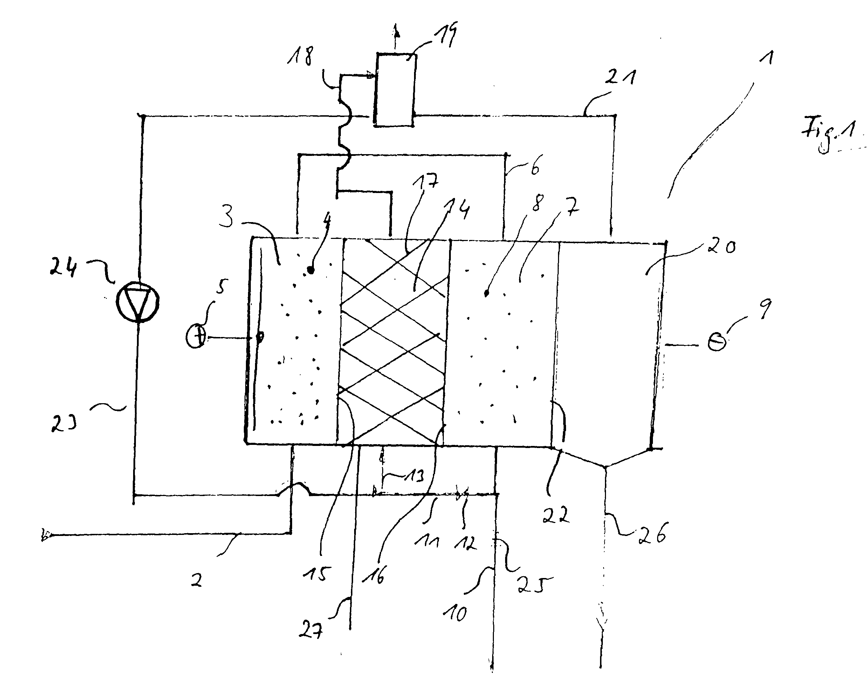

Figur 1 zeigt eine erfindungsgemäße Elektrolysezelle 1, bei der eine Leitung 2 in einen Anodenraum 3 mit einem Kationenaustauscher 4 und einer Anode 5 führt und sich in Form der Leitung 6 fortsetzt, welche in einen Anionenaustauscherraum 7 mit einem Anionenaustauscher 8 mündet und den Anionenaustauscherraum 7 in Form der Leitung 10 wieder verläßt. Von der Leitung 10 zweigt sich eine Leitung 11 mit einem Ventil 12 ab, die sich in Leitung 13 fortführt, welche in einen Soleraum 14 eintritt, welcher sich zwischen dem Anoden- und Anionenaustauscherraum 3,7 befindet und zum Anodenraum 3 durch eine Kationenaustauschermembran 15 sowie zum Anionenaustauscherraum 7 durch eine Anionenaustauschermembran 16 abgegrenzt ist. Im Soleraum 14 befindet sich ein Abstandhalter 17, welcher mechanische Stabilität verleiht. Leitung 18 verläßt den Soleraum 14 und tritt in eine Entgasungskammer 19 ein. Die Entgasungskammer 19 steht mit dem Kathodenraum 20, in welchem sich die Kathode 9 befindet, über Leitung 21 in Verbindung. Der Kathodenraum 20 ist von dem Anionenaustauscherraum 7 durch eine Anionenaustauschermembran 22 getrennt. Leitung 23 bildet mit Leitung 13 und der Entgasungskammer 19 eine Rückführung, in die eine Pumpe 24 integriert ist. Weiterhin befindet sich an Leitung 10 ein Ventil 25. Das teiltentsalzte Wasser tritt aus Leitung 10 aus. An den Kathodenraum 20 schließt sich die leitung 26 für den Auslaß von konzentrierter Lösung mit den Härtebildnern an. Der Soleraum 14 weist in einer alternativen Ausführungsform eine separate Eingangsleitung 27 auf.

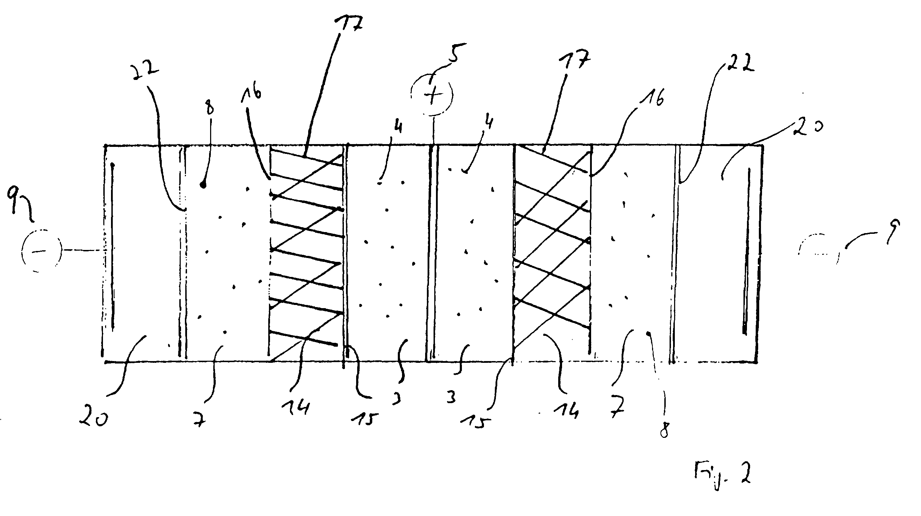

In Figur 2 tragen die gleichen Vorrichtungsmerkmale die selben Bezugszeichen. In ihr ist der Anodenraum 3 mittig angeordnet und von zwei Soleräumen 14 umgeben, welche mit dem Kathodenraum 20 jeweils einen Anionenaustauscherraum 7 einschließen.

Bei Betrieb wird das zu entsalzende Wasser in einer ersten Phase durch die Leitung 2 in den mit Kationenaustauscher 4 beladenen Anodenraum 3 eingeleitet. Hierbei erfolgt je nach Beladungszustand des Kationenaustauscherharzes eine vollständige oder Teilentkationisierung unter Freisetzung von H⁺-Ionen. Das Wasser tritt durch die Leitung 6 aus und gelangt in den Anionenaustauscherraum 7, welcher mit Anionenaustauscher 8 beschickt ist, der die Anionen gegen OH⁻-Ionen austauscht. Das aus der Leitung 10 austretende, entionisierte Wasser ist weitgehend pH-neutral. Wird diese erste Phase unter Anlegen eines Gleichstromes betrieben, so führt dies zu einer Desinfektion des Wassers durch O₂- oder ClO⁻-Bildung. Jedoch kann die erste Phase auch stromlos betrieben werden. Das Ventil 25 ist in dieser Phase geöffnet und das Ventil 12 geschlossen.

In einer zweiten Phase wird zwischen der Anode 5 und der Kathode 9 eine Spannung angelegt. Hierbei wird das Ventil 25 geschlossen und das Ventil 12 geöffnet. Der aus der Teilentsalzung resultierende Wasserstrom wird durch den Anodenraum 3 und den Anionenaustauscherraum 7 und danach durch die Leitungen 11 und 13 in den Soleraum 14 eingeleitet. In dieser Phase kann der Wasserstrom einen geringeren Volumendurchsatz als in Phase 1 haben. Alternativ kann in der Phase 2 auch durch die Leitung 27 direkt Trinkwasser in den Soleraum eingeführt werden. Durch die Anoden- und Kathodenprozesse werden im Anodenraum 3 H⁺-Ionen und Sauerstoff sowie im Kathodenraum 20 OH⁻-Ionen und Wasserstoff freigesetzt. Die H⁺- und OH⁻-Ionen wandern im elektrischen Feld durch die Ionenaustauscherharze und regenerieren diese, wobei die Kationen und die Anionen, welche vorher durch den Ionenaustauschprozeß gebunden wurden freigesetzt werden und in den Soleraum 14 wandern. Im Soleraum 14 werden die aus dem Regenierungsprozeß freigesetzten Ionen durch das Regenerierwasser, welches durch die Leitung 13 eingetragen wurde ausgespült. Danach und gelangen sie durch die Leitung 18 in die Entgasungskammer 19, in der in der Regerierlösung enthaltenen Carbonat-Ionen in Form von CO₂ ausgetrieben werden. Das um die Carbonat-Ionen verarmte Regenerierwasser tritt durch die Leitung 21 in den Kathodenraum 20 ein. Im elektrischen Feld wandern die in der Regenerierlösung vorhandenen Anionen x⁻, wie zum Beispiel Cl⁻-Ionen, wieder in Richtung Soleraum 14 durch den Anionenaustauscherraum 7. Gleichzeitig werden die durch die Elektrolyse an der Kathode 9 gebildeten OH⁻-Ionen in den Anionenaustauscherraum 7 transportiert. Erfindungsgemäß werden im elektrischen Feld nunmehr nicht nur die OH⁻-Ionen in den Anionenaustauscherraum 7 eingetragen, sondern auch ein Teil der in der Regenerierlösung vorhandenen Anionen von starken Säuren. Dies hat zur Folge, daß das Verhältnis OH⁻/Xⁿ⁻ (n≥1) verringert wird, und somit auch die Menge an OH⁻-Ionen welche in den Soleraum 14 eintreten. Das führt dazu, daß sich im Soleraum 14 ein niedriger pH-Wert einstellt. Das nunmehr saure Medium, welches sich im Soleraum 14 befindet führt dazu, daß sich im Soleraum keine Niederschläge mehr ablagern. Zusätzlich werden durch den niedrigen pH-Wert CO₃²⁻- Ionen, die in den Soleraum 14 eintreten und welche zu Ausfällungen führen könnten in CO₂ umgewandelt, das in der Entgasungskammer 19 entfernt wird. Daher kommt es auch im Kathodenraum 20 zu keinerlei Carbonatausfällungen mehr. Durch den niedrigen pH-Wert fallen auch keine Hydrodxide mehr aus. Die Membranen 15,16, und 22 bleiben ebenfalls niederschlagsfrei.

In einer alternativen Prozeßführung kann das Regenerierwasser auch aus Leitung 27 bezogen werden, die ohne vorherigen Anschluß an eine der mit Ionenaustauschern beschickten Anoden- und Kathodenräume 3,7 direkt in den Soleraum 14 mündet. In diesem Fall kann das Regenerierwasser der Phase 2 des Prozesses Brauch- oder Trinkwasser sein.

Bevorzugt ist jedoch Regenerierwasser, welches bereits der Teilentsalzung unterworfen wurde, da dieses mit weniger Ionen beladen ist und somit einen gründlicheren Austrag der Salze aus dem Soleraum 14 ermöglicht. Durch die Regenerierung mit bereits teilentsaltzem Wasser, welches durch den Anoden- und Anionenaustauscherraum 3,7 fließt, wird Chlorbildung an der Anode 5 verhindert, die harzgefüllten Räume 3,7 werden gekühlt und durch den Anodenprozeß gebildeter Sauerstoff wird ausgetrieben. Vorzugsweise werden die Phasen 1 und 2, also Ionenaustausch und Regernerierung alternierend durchgeführt, jedoch ist es auch möglich kontinuierlich Teilströme in den Leitungen 10 und 11 aufrechtzuerhalten und den Ionenaustausch sowie die Regenerierung gleichzeitig durchzuführen.

Durch das leicht saure Medium mit einem pH-Wert von kleiner als pH 4 wird die Entgasung ermöglicht. Das Regenerierwasser durchläuft dabei in der Entgasungskammer 19 einen Füllkörper, welcher zur Keimbildung für Gasblasen und somit zur Entgasung führt. Begünstigt wird die Entgasung noch zusätzlich durch den Sauerstoff, welcher durch den Anodenprozeß gebildet wird und durch den Prozeßstrom in die Entgasungskammer 19 gelangt. Eine Entgasung kann jedoch auch mit anderen Mitteln erfolgen, die bewirken, daß CO₂ ausgetrieben wird, wie zum Beispiel durch Vakuum oder thermische Behandlung.

Der Eintrag von X⁻-Ionen in den Soleraum 14 in der Phase 2 kann dadurch begünstigt werden, daß als Anionenaustauscher 8 ein Harz eingesetzt wird, welches bereits ganz oder teilweise mit Cl⁻, oder anderen Anionen außer CO₃²⁻-Ionen beladen ist. Dies macht sich insbesondere beim ersten Durchlauf des Regenerierwassers durch die Anlage bemerkbar, da sonst noch keine Anionen vorhanden sind, welche das Verhältnis OH⁻/X⁻ verringern.

In vorteilhaften Abwandlungen des erfindungsgemäßen Verfahrens und der Vorrichtung wird das Regenerierwasser mittels eines Bypasses, welcher einen Teilstrom des den Soleraumes 14 durchlaufenden Regenerierwassers rückführt, mit erhöhter Geschwindigkeit durch den Soleraum 14 gefördert. Der Bypass verläuft vorzugsweise von der Entgasungskammer 19 über die Pumpe 24 zur Leitung 13, wo das Wasser wieder in den Soleraum 14 eintritt. Dies hat den Vorteil, daß das Regenerierwasser bereits von Carbonat befreit ist. In einer weniger begünstigten Ausführungsform kann die Leitung 23, welche den Bypass bildet aber auch direkt von der Leitung 18 abzweigen. Die Pumpe 24 kann bei der Rückführung des Wassers auch in einem gepulsten Betrieb eingesetzt werden, so daß im Bypass geführtes Wasser einer Druckschwankung unterliegt. Alle diese Ausführungsformen haben zur Folge, daß der Soleraum 14, insbesondere die Membranen gereinigt werden. Der Diffusionsvorgang durch die Anionen- und Kationenaustauschermembranen 16,15 wird verbessert, Toträume werden vermieden, so daß ein gleichmäßigerer pH-Wert im Soleraum 14 besteht.

In einer weiteren bevorzugten Betriebsweise werden die Elektroden 5,9 kurzzeitig umgepolt, so daß eine Niederschlagsbildung an der Kathode 9 vermieden wird oder sich bildender Niederschlag abgestoßen wird. Besonders praktikabel ist es, die Wände des Kathodenraumes 20 glatt auszubilden, damit sich Niederschläge nicht festsetzen können, und den Boden der Kammer 20 trichterförmig auszubilden, damit sich bildender Niederschlag absetzen und nach unten durch die Leitung 26 abgeführt werden kann.

Die erfindungsgemäße Vorrichtung kann in allen Ausführungsformen gemäß Figur 2 spiegelsymmetrisch ausgebildet werden, wobei der Anodenraum 3 oder der Kathodenraum 20 das Symmertriezentrum bildet. Mit diesen Maßnahmen läßt sich die Kapazität der Vorrichtung verdoppeln und es können beide Seiten der mit Edelmetall beschichteten Anode 5 genutzt werden. Es ist auch ein kreisförmiger Aufbau der erfindungsgemäßen Vorrichtung denkbar, bei dem entweder die Anode 5 oder die Kathode 9 im Zentrum angeordnet ist.

Die Ionenaustauscherharze sind vorzugsweise stark sauer und stark basisch. Die Dicken des mit Kationenaustauscher 4 gefüllten Anodenraumes 3 und des mit Anionenaustauscher 8 gefüllten Anionenaustauscherraumes 7 betragen vorzugsweise eine Mächtigkeit von ≤ 20 mm. Dies gilt auch für den Kathodenraum 20 und den Soleraum 14.

In einer weniger bevorzugten Ausführungsform wird das Verhältnis der in den Soleraum 14 eintretenden Ionen OH⁻/X⁻ dadurch verringert, daß anstelle einer Einführung des den Soleraum 14 verlassenden Volumenstromes in den Kathodenraum 20, eine externe Zugabe von X⁻-Ionen in den Kathodenraum 20 erfolgt.

### Beispiel:

Eine erfindungegemäße Elektrolysezelle 1 mit den Dikken für den Anodenraum 3, den Soleraum 14, den Anionenaustauscherraum 7 und den Kathodenraum 20 von 1,5 cm und Membran- bzw. Elektrodenflächen von 175 cm², ist im Anodenraum 3 mit starksaurem gelförmigen Kationenaustauscherharz 4 gefüllt. Im Anionenaustauscherraum 7 befindet sich starkbasisches Anionenaustauscherharz 8.

Die Anionen- und Kationenaustauschermembranen sind kommerzielle Produkte, z.B. MC 3470 und MA 3475 der Firma Ionac. Die Anode besteht aus einem mit Edelmetall beschichteten Titanblech, die Kathode 9 aus einem Edelstahl. In der ersten Phase werden 5-30 Liter Trinkwasser bei einem Volumenstrom von ca. 120 l/h teilentsalzt. Der Härtegrad des eingesetzten Wassers nimmt dabei von 12,8°dH bis auf < 1°dH ab.

Die zweite Phase, die elektrochemische Regenerierung der beladenen Harzbetten, wird mit einem verminderten Volumenstrom oder mit Trinkwasser von 1-2 l/h durchgeführt. Bei einer maximalen Regenerationsdauer von zwei Stunden entspricht das einer Gesamtflüssigkeitsmenge von 2-4 Litern. Bei einer Gesamtzellspannung zwischen 35 V und 90 V wird mit einem Zellstrom von 3-5 A regeneriert. An die Glättung des Gleichstromes werden keine besonderen Anforderungen gestellt. Die Zellspannung wird alle 2 Minuten für 15 Sekunden umgepolt. Der Rückführungsstrom der Regenerierlösung über den Soleraum wird mit einer Kreiselpumpe auf 50-100 l/h eingestellt.

Bei dem erfindungsgemäßen Verfahren und der Vorrichtung müssen keine nicht-ausfällbaren Anionen extern zugegeben werden und die Niederschlagsbildung wird auf den Kathodenraum 20 begrenzt. Das dem Prozeß zu entnehmende Wasser ist keimfrei. Vorzugsweise werden mit dem erfindungsgemäßen Verfahren und der Vorrichtung Mg²⁺, Ca²⁺ sowie CO₃²⁻-Ionen und andere Anionen abgetrennt.

## Patentansprüche

1. Vorrichtung zur Teilentsalzung von Wasser umfassend einen mit Kationenaustauscher (4) beschickten Anodenraum (3), einen mit Anionenaustauscher (8) beschickten Anionenaustauscherraum (7) sowie einen sich zwischen dem Anoden- (3) und Anionenaustauscherraum (7) befindenden Soleraum (14), wobei der Anoden- (3) und Anionenaustauscherraum (7) durch eine Leitung (6) miteinander in Verbindung steht und der Anodenraum (3) vom Soleraum (14) durch eine Kationenaustauschermembran (15) und der Anionenaustauscherraum (7) vom Soleraum (14) durch eine Anionenaustauschermembran (16) getrennt ist, und wobei der Soleraum mit einer Eingangsleitung (13) und einer Ausgangsleitung (18) ausgestattet ist,
**dadurch gekennzeichnet,**
**daß** der Anionenaustauscherraum (7) eine zweite Anionenaustauschermembran (22) aufweist, welche den Anionenaustauscherraum (7) von einem Kathodenraum (20) trennt und daß die Ausgangsleitung (18) des Soleraums (14) mit der Leitung (21), welche in den Kathodenraum (20) führt, in Verbindung steht.

2. Vorrichtung nach Anspruch 1,
**dadurch gekennzeichnet,**
**daß** zwischen der Ausgangsleitung (18) und der Leitung (21), welche in den Kathodenraum (20) führt, ein Mittel zum Entfernen von CO₃²⁻ (19) angebracht ist.

3. Vorrichtung nach Anspruch 1 oder 2,
**dadurch gekennzeichnet,**
**daß** der mit Anionenaustauscher (8) beschickte Anionenaustauscherraum (7) eine Leitung (10,11,13) aufweist, die in den Soleraum (14) mündet.

4. Vorrichtung nach einem der Ansprüche 1 bis 3,
**dadurch gekennzeichnet,**
**daß** zwischen der Eingangsleitung (13) des Soleraumes (14) und der Ausgangsleitung (18) des Soleraumes (14) ein Bypass (23) gelegt ist, welcher eine Pumpe (24) aufweist.

5. Vorrichtung nach einem der Ansprüche 1 bis 4,
**dadurch gekennzeichnet,**
**daß** der durch die zweite Anionenaustauschermembran (22) abgegrenzte Kathodenraum (20) bodenseitig trichterförmig ausgebildet ist.

6. Vorrichtung nach Anspruch 5,
**dadurch gekennzeichnet,**
**daß** die Wände des Kathodenraumes (7) mit einer glatten Oberfläche ausgestattet sind.

7. Vorrichtung nach einem der Ansprüche 1 bis 6,
**dadurch gekennzeichnet,**
**daß** die Vorrichtung spiegelsymmetrisch ausgebildet ist, wobei der Anodenraum (3) oder der Kathodenraum (20) das Symmetriezentrum bildet.

8. Verfahren zur Teilentsalzung von Wasser, bei dem zwischen einem mit Kationenaustauschern (4) beladenen Anodenraum (3) und mit Anionenaustauscher (8) beladenem Anionenaustauscherraum (7), welche durch einen Soleraum (14) getrennt sind, der zur Anodenseite mit einer Kationenaustauschermembran (15) und zur Kathodenseite mit einer Anionenaustauschermembran (16), an die sich zur Kathodenseite hin ein Kathodenraum (20) anschließt, ausgestattet ist, eine Spannung angelegt wird, wobei in den Soleraum (14) eine Regenerierlösung eingebracht wird, welche das elektrische Feld durchläuft,
**dadurch gekennzeichnet,**
**daß** das bei der Elektrolyse auftretende Verhältnis der in den Soleraum (14) eintretenden OH⁻/Xⁿ⁻ (n≥1)-Ionen, wobei Xⁿ⁻ für Anionen starker Säuren steht, **dadurch** verkleinert wird, daß mindestens ein Teil der Regenerierungslösung, die durch Einleiten in den Soleraum (14) wieder mit Anionen Xⁿ⁻ beladen ist, in den Kathodenraum (20) geleitet wird und über eine zweite Anionenaustauschermembran (22) die Anionen im elektrischen Feld zunächst in den Anionenaustauscherraum (7) und dann über die Anionenaustauschermembran (16) erneut in den Soleraum (14) eingetragen werden.

9. Verfahren nach Anspruch 8,
**dadurch gekennzeichnet,**
**daß** die aus dem Soleraum (14) austretende Regenerierlösung ein Mittel zum Entfernen von CO₃²⁻ (19) durchläuft und in den Kathodenraum (20) eingeleitet wird.

10. Verfahren nach einem der Ansprüche 8 bis 9,
**dadurch gekennzeichnet,**
**daß** die in den Soleraum (14) eintretende Regenerierlösung enthärtet ist.

11. Verfahren nach Anspruch 10,
**dadurch gekennzeichnet,**
**daß** die in den Soleraum (14) eintretende Regenerierlösung zunächst den mit Kationenaustauscher (4) beschickten Anodenraum (3) und den mit Anionenaustauscher (8) beschickten Anionenaustauscherraum (7) durchläuft.

12. Verfahren nach einem der Ansprüche 8 bis 11,
**dadurch gekennzeichnet,**
**daß** die aus dem Soleraum (14) austretende Regenerierlösung mindestens teilweise in einem Kreislauf in den Soleraum (14) rückgeführt wird.

13. Verfahren nach einem der Ansprüche 8 bis 12,
**dadurch gekennzeichnet,**
**daß** das elektrische Feld kurzzeitig umgepolt wird.

## Claims

1. Device for partial desalination of water comprising an anode space (3) fed with cation exchanger (4), an anion exchange space (7) fed with anion exchange (8), and a brine space (14) located between the anode (3) and anion exchanger space (7), wherein the anode (3) and anion exchanger space (7) are connected to each other by a pipe (6), the anode space (3) is separated from the brine space (14) by a cation exchanger membrane (15) and the anion exchanger space (7) is separated from the brine space (14) by an anion exchanger membrane (16), and wherein the brine space is equipped with an inlet pipe (13) and an outlet pipe (18), **characterised in that** the anion exchanger space (7) exhibits a second anion exchanger membrane (22) which separates the anion exchanger space (7) from a cathode room (20), and **in that** the outlet pipe (18) of the brine space (14) is connected to the pipe (21) which leads into the cathode space (20).

2. Device according to Claim 1, **characterised in that** means for removing CO₃²⁻ (19) is fitted between the outlet pipe (18) and the pipe (21) which leads into the cathode space (20).

3. Device according to Claim 1 or 2, **characterised in that** the anion exchanger space (7) fed with anion exhibits a pipe (10, 11, 13) which opens into the brine space (14).

4. Device according to one of Claims 1 to 3, **characterised in that** a bypass (23) which exhibits a pump (24) is installed between the inlet pipe (13) of the brine space (14) and the outlet pipe (18) of the brine space (14).

5. Device according to one of Claims 1 to 4, **characterised in that** the cathode space (20) demarcated by the second anion exchanger membrane (22) is designed at the bottom in the shape of a funnel.

6. Device according to Claim 5, **characterised in that** the walls of the cathode space (7) are provided with a smooth surface.

7. Device according to one of Claims 1 to 6, **characterised in that** the device is of a mirror symmetrical design, wherein the anode space (3) or the cathode space (20) forms the centre of symmetry.

8. Method for partial desalination of water, wherein a voltage is applied between an anode space (3) loaded with cation exchangers (4) and an anion exchanger space (7) loaded with anion exchanger (8), which spaces are separated by a brine space (14) which is equipped with a cation exchanger membrane (15) on the anode side and with an anion exchanger membrane (16) on the cathode side, to which membrane a cathode space (20) is connected toward the cathode side, and wherein a regenerating solution is introduced into the brine space (14), which solution flows through the electrical field, **characterised in that** the ratio of the OH⁻ / Xⁿ⁻ (n≥1) ions entering the brine space (14), occurring during the electrolysis, where Xⁿ⁻ stands for anions of strong acids, is reduced **in that** at least a proportion of the regenerating solution which is again charged with anions Xⁿ⁻ by being introduced into the brine space (14) is fed into the cathode space (20) and **in that** the anions in the electrical field are carried first by a second anion exchanger membrane (22) into the anion exchanger space (7), then by the anion exchanger membrane (16) back into the brine space (14).

9. Method according to Claim 8, **characterised in that** the regenerating solution escaping from the brine space (14) flows through means for removing CO₃²⁻ (19) and is introduced into the cathode space (20).

10. Method according to one of Claims 8 to 9, **characterised in that** the regenerating solution entering into the brine space (14) is softened.

11. Method according to Claim 10, **characterised in that** the regenerating solution entering the brine space (14) flows first through the anode space (3) fed with cation exchanger (4), then through the anion exchanger space (7) fed with anion exchanger (8*).

12. Method according to one of Claims 8 to 11, **characterised in that** the regenerating solution escaping from the brine space (14) is returned at least partially to the brine space (14) in a circuit.

13. Method according to one of Claims 8 to 12, **characterised in that** the pole of the electrical field is reversed for a short time.

## Revendications

1. Dispositif de dessalement partiel de l'eau, comprenant une chambre d'anode (3) chargée d'échangeurs de cations (4), une chambre d'échangeurs anioniques (7) chargée d'échangeurs d'anions (8) ainsi qu'une chambre à saumure (14) se trouvant entre la chambre d'anode (3) et la chambre d'échangeurs anioniques (7), dans lequel la chambre d'anode (3) et la chambre d'échangeurs anioniques (7) sont en communication l'une avec l'autre par une conduite (6) et la chambre d'anode (3) est séparée de la chambre à saumure (14) par une membrane échangeuse de cations (15) et la chambre d'échangeurs anioniques (7) est séparée de la chambre à saumure (14) par une membrane échangeuse d'anions (16), et dans lequel la chambre à saumure est équipée d'une conduite d'entrée (13) et d'une conduite de sortie (18), **caractérisé en ce que** la chambre d'échangeurs anioniques (7) présente une deuxième membrane échangeuse d'anions (22), qui sépare la chambre d'échangeurs d'anions (7) d'une chambre de cathode (20) et **en ce que** la conduite de sortie (18) de la chambre à saumure (14) est en communication avec la conduite (21), qui conduit dans la chambre de cathode (20).

2. Dispositif selon la revendication 1, **caractérisé en ce qu'**un moyen d'élimination de CO₃²⁻ (19) est placé entre la conduite de sortie (18) et la conduite (21), qui conduit dans la chambre de cathode (20).

3. Dispositif selon la revendication 1 ou 2, **caractérisé en ce que** la chambre d'échangeurs anioniques (7) chargée d'échangeurs d'anions (8) présente une conduite (10, 11, 13) qui débouche dans la chambre à saumure (14).

4. Dispositif selon l'une quelconque des revendications 1 à 3, **caractérisé en ce qu'**une dérivation (23), qui comporte une pompe (24), est placée entre la conduite d'entrée (13) de la chambre à saumure (14) et la conduite de sortie (18) de la chambre à saumure (14).

5. Dispositif selon l'une quelconque des revendications 1 à 4, **caractérisé en ce que** la chambre de cathode (20) délimitée par la deuxième membrane échangeuse d'anions (22) est configurée du côté du fond en forme de trémie.

6. Dispositif selon la revendication 5, **caractérisé en ce que** les parois de la chambre de cathode (20) sont pourvues d'une surface lisse.

7. Dispositif selon l'une quelconque des revendications 1 à 6, **caractérisé en ce que** le dispositif présente une configuration symétrique, dans laquelle la chambre d'anode (3) ou la chambre de cathode (20) forme le centre de symétrie.

8. Procédé de dessalement partiel de l'eau, dans lequel on applique une tension entre une chambre d'anode (3) chargée d'échangeurs de cations (4) et une chambre d'échangeurs anioniques (7) chargée d'échangeurs d'anions (8), qui sont séparées par une chambre à saumure (14), qui est équipée du côté de l'anode d'une membrane échangeuse de cations (15) et du côté de la cathode d'une membrane échangeuse d'anions (16), à laquelle se raccorde une chambre de cathode (20) en direction du côté de la cathode, dans lequel on introduit dans la chambre à saumure (14) une solution de régénération qui traverse le champ électrique, **caractérisé en ce que** l'on réduit le rapport, apparaissant lors de l'électrolyse, des ions OH⁻/Xⁿ⁻ (n ≥ 1) entrant dans la chambre à saumure (14), avec Xⁿ⁻ représentant des anions d'acides forts, par le fait que l'on conduit au moins une partie de la solution de régénération, qui est à nouveau chargée d'anions Xⁿ⁻ par introduction dans la chambre à saumure (14), dans la chambre de cathode (20) et que les anions sont introduits par une deuxième membrane échangeuse d'anions (22) dans le champ électrique d'abord dans la chambre d'échangeurs anioniques (7) et ensuite par la membrane échangeuse d'anions (16) à nouveau dans la chambre à saumure (14).

9. Procédé selon la revendication 8, **caractérisé en ce que**.la solution de régénération sortant de la chambre à saumure (14) traverse un moyen d'élimination de CO₃²⁻ (19) et est introduite dans la chambre de cathode (20).

10. Procédé selon l'une quelconque des revendications 8 à 9, **caractérisé en ce que** la solution de régénération entrant dans la chambre à saumure (14) est adoucie.

11. Procédé selon la revendication 10, **caractérisé en ce que** la solution de régénération entrant dans la chambre à saumure (14) traverse d'abord la chambre d'anode (3) chargée d'échangeurs de cations (4) et la chambre d'échangeurs anioniques chargée d'échangeurs d'anions (8).

12. Procédé selon l'une quelconque des revendications 8 à 11, **caractérisé en ce que** la solution de régénération sortant de la chambre à saumure (14) est renvoyée au moins en partie dans un circuit dans la chambre à saumure (14).

13. Procédé selon l'une quelconque des revendications 8 à 12, **caractérisé en ce que** l'on inverse temporairement la polarité du champ électrique.
